**Europäisches Patentamt**

**European Patent Office**

**Office européen des brevets**

(11) Veröffentlichungsnummer: **0 011 175**

**A1**

## EUROPÄISCHE PATENTANMELDUNG

(21) Anmeldenummer: **79104199.9**

(22) Anmeldetag: **29.10.79**

(51) Int. Cl.³: **B 21 D 11/14**
**B 29 C 17/02**

(30) Priorität: **09.11.78 DE 2848679**

(43) Veröffentlichungstag der Anmeldung:
**28.05.80 Patentblatt 80/11**

(84) Benannte Vertragsstaaten:
**BE CH DE FR GB IT NL SE**

(71) Anmelder; **bayer AG**
**Zentralbereich Patente, Marken und Lizenzen**
**D-5090 Leverkusen 1, Bayerwerk(DE)**

(72) Erfinder: **Melin, Thomas, Dr. c/o Cutter Laboratories, Inc.**
**Fourth and Parker Streets**
**Berkeley, California 94710(US)**

(54) **Verfahren und Vorrichtung zur Herstellung von gewendelten Streifen.**

(57) Zur Wendelherstellung wird ein Streifen (7) aus plastisch verformbarem Material, z.B. Drahtgewebe, zwischen zwei drehbaren Walzen (1,2) hindurchgeführt, deren Achsen (3,4) schräg zueinander im Raum Liegen. Zur Erzeugung der entgegengesetzt gerichteten Verformungskräfte in den beiden Randzonen des Streifens (7) sind die Walzen (1,2) abweichend von der Zylindergeometrie so geformt, daß ihr Durchmesser von der Walzenmitte aus gesehen zu den Enden hin zunimmt. Besonders bewährt haben sich Führungswalzen (1,2) deren Oberfläche ein Rotationshyperboloid (5,6) bildet.

FIG. 2

EP 0 011 175 A1

0011175

BAYER AKTIENGESELLSCHAFT          5090 Leverkusen, Bayerwerk
Zentralbereich                     Ki/bc/Kü
Patente, Marken und Lizenzen


Verfahren und Vorrichtung zur Herstellung von gewendelten
Streifen


Die Erfindung betrifft ein Verfahren und eine Vorrichtung
zur Herstellung von gewendelten Streifen (Schraubenwendeln).


## Zweck und Ziel

Gewendelte Streifen werden in der chemischen Verfahrenstechnik als Bauelemente für statische Mischer, Wärmeaustauscher und Reaktoren zur Verbesserung des Verweilzeitspektrums verwendet.


## Stand der Technik

Mit der Verdrillung eines Blechstreifens tritt eine erhebliche Stauchung im Bereich der Wendelachse und eine
erhebliche Streckung im Bereich der Ränder auf. Aufgrund


Le A 18 386 -EP

dieser Materialbelastungen war bisher eine kontinuierliche, enge Wendelung von Blechstreifen nicht möglich. So werden z.B. die bekannten schraubenwendelförmigen Elemente eines statischen Mischers einzeln gepreßt oder geschmiedet. Dies bedeutet einen hohen fabrikationstechnischen Aufwand.

## Aufgabe

Der Erfindung liegt die Aufgabe zugrunde, ein Verfahren und eine Vorrichtung zu einer wirtschaftlichen Herstellung von wendelförmigen Streifen zu entwickeln. Dabei soll das Verhältnis von Ganghöhe h zu Streifenbreite b der gewendelten Streifen kleiner als 3:1 sein.

## Lösung

Diese Aufgabe wird erfindungsgemäß dadurch gelöst, das ein Streifen aus plastisch verformbaren Material zwischen zwei drehbaren Walzen mit verschränkten Achsen hindurchgeführt wird, deren Oberflächen so geformt sind, daß in den beiden Randzonen des Streifens senkrecht zur Streifenebene gleich große aber entgegengesetzt gerichtete Verformungskräfte einwirken. Vorteilhaft wird mindestens eine der beiden Walzen angetrieben. Als Ausgangsmaterial werden zweckmäßig gelochte, geschlitzte oder eingeschnittene Blechstreifen verwendet. Insbesondere hat sich Drahtgewebe als Ausgangsmaterial bewährt, das unter einem Winkel von 20 bis 70°, vorzugsweise 45° zur Gewebestruktur geschnitten ist. Die so hergestellten Streifen können durch eine Nachbehandlung, z.B. durch Beschichtung mit Kunststoff, Keramik oder Metall

L A 18 386

verfestigt werden.

Die Vorrichtung zur Durchführung des Verfahrens ist erfindungsgemäß dadurch gekennzeichnet, daß zwei gegenläufig drehbare, mit einem Antrieb versehene Führungswalzen verschränkt übereinander angeordnet sind, deren Durchmesser von der Walzenmitte aus gesehen zu den Enden hin kontinuierlich oder in Stufen zunimmt und deren Oberflächen sich zumindest teilweise berühren oder einen engen Spalt miteinander bilden.

Vorzugsweise sind die beiden Walzen näherungsweise als Rotationshyperboloide ausgebildet, deren Oberflächen sich längs einer Geraden B berühren. Auf diese Weise wird eine besonders gute Führung der Streifen erreicht. Vorteilhaft ist zumindest eine der beiden Führungswalzen federnd aufgehängt. Der Abstand, d.h. der Spalt zwischen den beiden Führungswalzen, paßt sich dann automatisch an die Materialstärke an. Um ein Durchrutschen der Streifen zu verhindern, ist es zweckmäßig, wenn zumindest die Oberfläche der Antriebswalze rillen- oder rasterförmige Vertiefungen aufweist.

Die Erfindung schafft die Voraussetzungen für eine kontinuierliche Herstellung gewendelter Streifen in nahezu beliebiger Länge, so daß wendelförmige Einbauten kostengünstig in großen Stückzahlen hergestellt werden können. Ein weiterer Vorteil besteht darin, daß der charakteristische Parameter der Wendeln, i.e. die Ganghöhe h verhältnismäßig leicht durch eine Änderung der Walzengeometrie beeinflußt werden kann. Man braucht z.B. nur den Winkel, den die beiden Walzenachsen

Le A 18 386

miteinander bilden, zu verändern.

Im folgenden wird ein Ausführungsbeispiel der Erfindung anhand von Zeichnungen näher erläutert. Es zeigen

Figur 1    einen gewendelten Streifen in perspektivischer Darstellung;

Figur 2    eine Walzenvorrichtung zur Herstellung der gewendelten Streifen;

Figur 3    eine vereinfachte Walzenvorrichtung, die zur Herstellung von gewendelten Streifen aus Gewebematerial geeignet ist und

Figur 4 a) bis e) Streifenmaterial mit verschiedenartigen Loch- bzw. Schlitzformen.

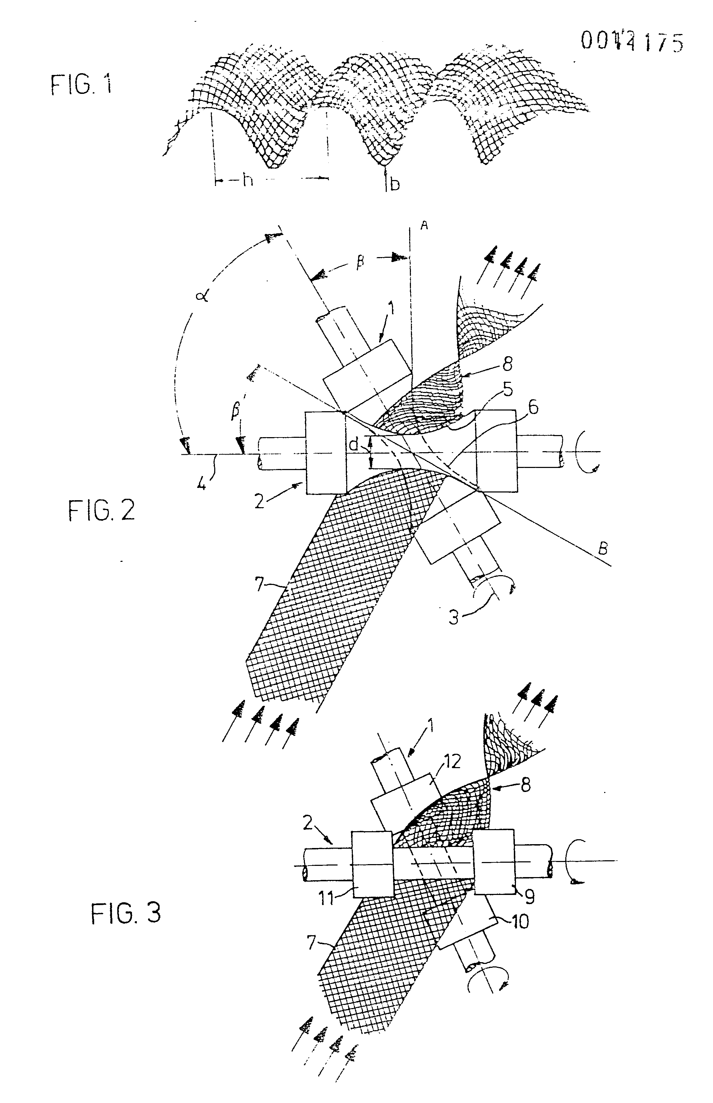

Der schraubenförmig gewendelte Streifen gemäß Figur 1 hat die Breite b und die Ganghöhe h (180$^{\circ}$-Wendelungslänge). Aus anwendungstechnischer Sicht besteht insbesondere Interesse an Wendeln mit einem Verhältnis h:b kleiner als 3:1, falls erforderlich sogar kleiner als 2:1. Zu vermeiden sind Wendelfehler, wie Schwankungen der Ganghöhe h Knickungen in den Wendelflächen, oder Abweichungen von der Geradlinigkeit der Wendelachse.

Die Walzenvorrichtung gemäß Figur 2 besteht aus den beiden gleichförmigen Führungswalzen 1 und 2, deren Achsen verschränkt sind. Verschränkt bedeutet, daß sich die Achsen 3 und 4 weder schneiden noch parallel zueinander sind sondern windschief zueinander liegen. Die Zeichenebene ist hier so gewählt, daß sie senkrecht zur kürzesten Verbindungslinie der beiden Walzenachsen liegt. Die Walzenachsen 3 und 4 schließen in dieser Projektionsebene

Le A 18 386

den Winkel $\alpha$ miteinander ein. Beide Walzen haben die Form eines Rotationshyperboloides 5,6. Sie sind so zueinander angeordnet, daß sie eine gemeinsame Berührungslinie B aufweisen oder zumindest im Bereich der Linie B einen engen Spalt bilden. Zu diesem Zweck ist die obere Walze 2 in der Weise gelagert, daß sie gegen die Wirkung einer Feder (nicht gezeigt) senkrecht zur Zeichenebene ausweichen kann. Die Lage der Walzen und die Form der Rotationshyperboloide 5 und 6 werden so gewählt, daß der Winkel $\alpha$ zwischen den Walzenachsen 3 und 4 in der Projektionsebene gleich dem doppelten Winkel ß zwischen der Hyperbelassymptote a und der dazugehörigen Walzenachse 3 ist.

Der zu wendelnde Streifen 7, der hier aus einem unter $45^\circ$ geschnittenen Gewebematerial besteht, wird zwischen den beiden Walzen 1 und 2 hindurchgeführt. Dabei wird die Walze 2 um einen Betrag angehoben, der der Dicke des Streifens entspricht, d.h. der Spalt zwischen den beiden Walzen 1 und 2 ist bei eingeschobenem Streifen 7 gleich der Dicke dieses Streifens. Die Walzen 1 und 2 sind gegenläufig mit gleicher Umfangsgeschwindigkeit angetrieben. In der Walzenvorrichtung wird der Streifen 7 in Transportrichtung auf der linken Seite schräg nach unten und auf der rechten Seite schräg nach oben gedrückt. In der Walzenvorrichtung wirken also auf die beiden Randzonen des Streifens annähernd senkrecht zur Streifenebene gleich große aber entgegengesetzt gerichtete Verformungskräfte ein. In der Mitte des Streifens ist die Kraft O. Die Streifentransportrichtung ist senkrecht zur Berührungslinie B der beiden Rotationshyperpolloide 5,6. Aufgrund der Zwangsführung in der Walzenvorrichtung wird der Streifen verdrillt. Es entsteht eine Wendel 8.

Le A 18 386

deren Achse mit der Mittellinie des Streifens zusammen fällt. Die hyperbelförmige Kontur der Walzen 1 und 2 stellt keine notwendige Voraussetzung für die Verdrillung dar. Wichtig ist jedoch, daß der Durchmesser der Walzen von ihrer Mitte aus gesehen nach außen hin zunimmt. Bei einem Drahtgewebestreifen, der eine hohe Formelastizität besitzt, genügt eine Ausführung der Walzenvorrichtung (s. Figur 3), bei der der Walzendurchmesser von innen nach außen stufenförmig zunimmt. Gemäß Figur 3 sind die Führungswalzen 1 und 2 zylindrisch, weisen jedoch an ihren Enden Scheiben 9 mit größerem Durchmesser auf. Der linke Rand des Streifens 7 läuft zunächst unter der Scheibe 11 der oberen Walze 2 hindurch und wird dann über die Randscheibe 12 der unteren Walze 1 geführt. Demgegenüber wird der rechte Rand des Streifens 7 zuerst durch die Randscheibe 10 der unteren Walze 1 angehoben und läuft anschließend unter der Randscheibe 9 der oberen Walze 2 hindurch.

Die Ganghöhe h der sich ergebenden Wendel 8 kann über den Winkel $\alpha$ und den Mittendurchmesser d der Walzen 1 und 2 beeinflußt werden. Je größer $\alpha$ und je kleiner d, desto enger wird die Wendelung. Für d = 6 mm und $\alpha$ = 60° ergibt sich z.B. eine Ganghöhe von ca. 40 mm und für d = 4 mm und $\alpha$ = 60° eine Ganghöhe von ca. 25 mm. Durch Einstellung dieser Parameter kann also die Wendelform leicht geändert werden. In kleinerem Ausmaß ist auch eine Beeinflussung von W durch den Anpreßdruck der federbelasteten Walze möglich.

Zur Verbesserung der Förderwirkung der Walzen 1 und 2 wird die hyperbelförmige Oberfläche mit raster- oder rillenförmigen Vertiefungen versehen (nicht gezeigt). Solche Vertiefungen lassen sich z.B. dadurch erreichen, daß man die Walze einspannt und einen Werkzeugstahl oder Fräser längs einer zur Walzenachse windschiefen Geraden entlangführt dann die Walze um einen Winkel
$\gamma$ dreht, den Werkzeugstahl wieder entlang der windschiefen
Geraden führt usw. Durch die Vertiefungen in der Walzenoberfläche wird die Friktion der Antriebswalze heraufgesetzt und damit die Förderwirkung verbessert. Die Walzengeschwindigkeit, die den Streifenvorschub bestimmt,
ist unkritisch und liegt z.B. im Bereich von 20-2000 U/min.

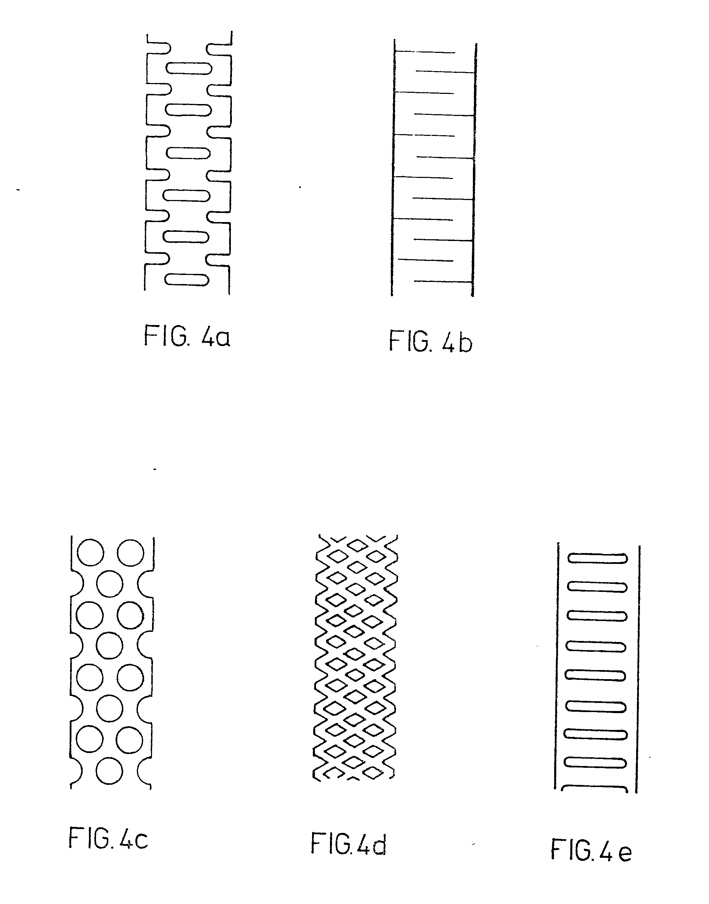

Voraussetzung für dieses Herstellungsverfahren ist die
plastische Verformbarkeit des Streifenmaterials. Die notwendige Verformbarkeit kann z.B. bei Kunststoffen oder
Glas durch Anwendung erhöhter Temperaturen gewährleistet
werden. Bei diesen Materialien ist in jedem Falle die
Walzenvorrichtung mit den hyperbeförmigen Walzenkonturen
gemäß Figur 2 vorzuziehen. Aufgrund ihrer formelastischen
Eigenschaften sind, wie schon erwähnt, schräg zur Webrichtung geschnittene Drahtgewebe (Schnittwinkel 20 bis
70°C) besonders gut als Streifenmaterial geeignet. Die
leichte Verformbarkeit beruht hier darauf, daß schräg geschnittene Drahtgewebestreifen eine unterschiedlich große Dehnung in eng benachbarten Bereichen (Streifenrand
und Streifenmitte) ohne Anwendung von übermäßig großen
Kräften ermöglichen und dennoch nach der Wendelung ausreichende Stabilität aufweisen. Bei der Verformung tritt
in diesem Fall keine Längsdehnung bzw. Stauchung der
Drähte oder Fasern ein, sondern nur eine Verformung der
Maschen, die nur mit einer geringen Verbiegung der Drähte oder Fasern einhergeht. Aus dem selben Grund sind geeignet gelochte, geschlitzte oder eingeschnittene Bleche oder sogenanntes Streckmetall (s. Fig. 4 d) für das erfindungsgemäße Verfahren. Gegenüber einem durchgehenden

Le A 18 386

Blechstreifen wird hier analog zum Gewebestreifen die Streckung oder Stauchung des Materials zu einem großen Teil durch eine Deformation der Loch- bzw. Schlitzform ersetzt. Solche Streifen sind in den Figuren 4 a) bis e) dargestellt. Man erkennt leicht,daß vielfältige Abwandlungen möglich sind, bei denen stets das Grundziel, nämlich die Verringerung der erforderlichen Verformungskräfte, erreicht wird.

Zur Erhöhung der Formstabilität und auch für Anwendungen, bei denen die Wendeloberfläche undurchlässig sein muß, kann die aus Drahtgewebe gefertigte Wendel mit Kunststoff, Keramik oder Metall beschichtet werden. Ferner kann der als Gerüst anzusehende, aus Drahtgewebe oder gelochtem bzw. geschlitzem Blech bestehende Streifen gemeinsam mit einem wesentlich dünneren oder leicht verformbaren undurchlässigen Streifen durch die Walzenvorrichtung geführt werden.

Falls eine sehr große Anzahl von gewendelten Streifen benötigt wird, empfiehlt es sich mehrere Walzenvorrichtungen nebeneinander anzuordnen und vor dem Eintritt in die Walzenvorrichtungen einen breiten Streifen kontinuierlich in eine Vielzahl von schmalen Einzelstreifen zu schneiden.

Le A 18 386

Patentansprüche

1) Verfahren zur Herstellung von gewendelten Streifen, dadurch gekennzeichnet, daß ein Streifen aus plastisch verformbarem Material zwischen zwei drehbaren Walzen mit verschränkten Achsen hindurchgeführt wird, deren Oberflächen so geformt sind, daß in den beiden Randzonen des Streifens etwa senkrecht zur Streifenebene gleichgroße aber entgegengesetzt gerichtete Verformungskräfte einwirken.

2) Verfahren nach Anspruch 1, dadurch gekennzeichnet, daß mindestens eine der beiden Walzen angetrieben wird.

3) Verfahren nach Anspruch 1 bis 2, dadurch gekennzeichnet, daß gelochte, geschlitzte oder eingeschnittene Blechstreifen als Ausgangsmaterial verwendet werden.

4) Verfahren nach Anspruch 1 bis 2, dadurch gekennzeichnet, daß ein Drahtgewebe als Ausgangsmaterial verwendet wird, das unter einem Winkel von 20 bis 70°, vorzugsweise 45°, zur Gewebestruktur geschnitten wird.

5) Verfahren nach Anspruch 1 bis 4, dadurch gekennzeichnet, daß der gewendelte Streifen durch eine Nachbehandlung verfestigt wird.

6) Vorrichtung zur Durchführung des Verfahrens gemäß den Ansprüchen 1 bis 4, dadurch gekennzeichnet, daß zwei gegenläufig drehbare, mit einem Antrieb ver-

Le A 18 386

sehene Führungswalzen (1) und (2) verschränkt übereinander angeordnet sind, deren Durchmesser von der Walzenmitte aus gesehen zu den Enden hin kontinuierlich oder in Stufen zunimmt und deren Oberflächen sich zumindest teilweise berühren oder einen engen Spalt miteinander bilden.

7) Vorrichtung nach Anspruch 6, dadurch gekennzeichnet, daß die beiden Walzen näherungsweise als Rotationshyperboloide (5) und (6) ausgebildet sind, deren Oberflächen sich längs einer Geraden B berühren.

8) Vorrichtung nach Anspruch 6 bis 7, dadurch gekennzeichnet, daß zumindest eine der beiden Führungswalzen (1), (2) federnd aufgehängt ist.

9) Vorrichtung nach Anspruch 6 bis 8, dadurch gekennzeichnet, daß die Walzenoberfläche zur Erhöhung der Reibung rillen- oder rasterförmige Vertiefungen aufweist.

10) Gewendelte Streifen, hergestellt nach dem Verfahren gemäß Anspruch 3 oder 4.

FIG. 1

0011175

FIG. 2

FIG. 3

FIG. 4a

FIG. 4b

FIG. 4c

FIG. 4d

FIG. 4e

**Europäisches Patentamt**

## EUROPÄISCHER RECHERCHENBERICHT

EP 79 104 199.9

| Kategorie | Kennzeichnung des Dokuments mit Angabe, soweit erforderlich, der maßgeblichen Teile | betrifft Anspruch | KLASSIFIKATION DER ANMELDUNG (Int.Cl.) |
|---|---|---|---|
| | **EINSCHLÄGIGE DOKUMENTE** | | |
| X | CH - A - 215 348 (E. LUKACS et al.)<br>* Unteransprüche 3, 4; Fig. 3 *<br>-- | 1,6 | B 21 D 11/14<br>B 29 C 17/02 |
| | US - A - 1 740 612 (W. LOWE)<br>* Ansprüche 1, 2, 4; Fig. 11 *<br>-- | 1 | |
| | US - A - 2 233 869 (E. LUKACS)<br>* Seite 2 *<br>-- | 1 | |
| | US - A - 3 222 908 (F.A. MOLELLA)<br>* Anspruch 1; Fig. 3 *<br>-- | 1 | **RECHERCHIERTE SACHGEBIETE (Int. Cl.)** |
| A | DE - A1 - 2 421 550 (SÜDDEUTSCHE KÜHLERFABRIK)<br>* ganzes Dokument *<br>-- | | B 21 B 15/00<br>B 21 D 11/00<br>B 21 D 13/00<br>B 29 C 15/00<br>B 29 C 17/00 |
| A | US - A - 3 468 146 (W.G. NEWMAN et al.)<br>* ganzes Dokument *<br>-- | | |
| A | US - A - 3 421 351 (W.G. NEWMAN et al.)<br>* ganzes Dokument *<br>---- | | |

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Berlin | 0 -02-1980 | SCHLAITZ |